Europäisches Patentamt

European Patent Office

Office européen des brevets

(19)

(11) **EP 0 724 142 B1**

(12) **FASCICULE DE BREVET EUROPEEN**

(45) Date de publication et mention
de la délivrance du brevet:
**12.11.1997 Bulletin 1997/46**

(51) Int Cl.⁶: **G01G 23/16**, G01G 23/01

(21) Numéro de dépôt: **96400050.9**

(22) Date de dépôt: **09.01.1996**

(54) **Procédé de tarage d'une balance électronique et de mesure avec cette balance.**

Verfahren zum Tarieren einer Waage und zum Messen mit solch einer Waage.

Method for taring an electronic balance and for measuring with this balance.

(84) Etats contractants désignés:
**DE FR GB IT**

(30) Priorité: **27.01.1995 FR 9500992**

(43) Date de publication de la demande:
**31.07.1996 Bulletin 1996/31**

(73) Titulaire: **SGS-THOMSON MICROELECTRONICS
SA**
**94250 Gentilly (FR)**

(72) Inventeur: **Le Van Suu, Maurice**
**c/o Cabinet Ballot Schmit**
**75116 Paris (FR)**

(74) Mandataire: **Schmit, Christian Norbert Marie**
**Cabinet Ballot-Schmit**
**7, rue Le Sueur**
**75116 Paris (FR)**

(56) Documents cités:
**WO-A-90/13794**          **US-A- 4 137 979**
**US-A- 4 873 655**

**Description**

La présente invention a pour objet un procédé de tarage d'une balance électronique, de mesure d'un poids avec cette balance, et plus généralement de tarage et/ou de mesure pour tout autre appareil électronique. Dans le cas des balances, elle est plus particulièrement utilisable dans le domaine des balances à trois pesons, ou jauges électriques, mais elle pourrait l'être dans le domaine des balances à deux pesons ou autres. Bien que l'invention soit décrite dans le domaine des balances, elle sera toujours applicable dans le domaine général des appareils électroniques, munis d'au moins un capteur de mesure.

Le but de l'invention est de résoudre les problèmes de tarage rencontrés avec les balances de l'état de la technique. Dans ceux-ci, pour déterminer le poids d'un objet quelconque, le système de pesage utilise trois informations : une information provenant d'un capteur de flexion, une autre provenant d'un capteur de déformation axiale, une dernière provenant d'un capteur de torsion. Les informations collectées sont en principe toutes directement proportionnelles au poids de l'objet. Chaque capteur a une dynamique de mesure permettant de prendre en compte des valeurs entre un poids $P1$ et un poids $P2$, par exemple 0 à 200 kg pour des pèse-personnes du commerce.

Il existe plusieurs types de capteurs : jauge de contrainte à base de résistance de type silicium ou du type magnétique. La dynamique de mesure change d'un type à l'autre. Comme le signal de sortie d'un capteur est faible, en général on l'amplifie avant de l'interpréter. De même, pour arrêter les bruits qui perturbent ce signal, il est connu de le filtrer. Par exemple, on en prend des échantillons successifs et on en calcule une moyenne.

Dans l'invention, par ailleurs, on mettra en oeuvre une technique complémentaire dans laquelle, la quantification du signal délivré par un capteur comporte la création d'un signal en forme de rampe, la comparaison du signal en rampe au signal mesuré, et la prise en compte des états d'un compteur temporel déclenché par la création de la rampe et arrêté lors de l'égalité du signal de rampe et du signal mesuré. On évitera alors, avec l'invention, les dérives dues aux organes qui servent à alimenter les capteurs ou à produire le signal de rampe, notamment un condensateur.

Le principe du tarage, du calibrage, des systèmes anciens de mesure de poids nécessite une modélisation de la fonction de transfert représentant la mesure du poids en fonction des signaux des différents capteurs. Lorsqu'il y a une dérive, il faut ajouter des termes correctifs à cette fonction : la rendre de plus en plus complexe. Dans certains cas, il faut retoucher les capteurs eux-mêmes, par exemple par des techniques de brûlage au laser. Ces techniques ne sont bien entendu pas adaptées à des fabrications en grande série où il importe de limiter le nombre de manipulations des objets manufacturés au moment de les mettre au point.

Un objet de l'invention est donc de permettre le tarage des différents objets fabriqués sans recourir à des techniques lourdes. On cherchera notamment avec l'invention à avoir un système à auto-apprentissage. De même, dans le cas où la correction à apporter est stockée dans la mémoire d'un circuit intégré, la taille de celle-ci ne peut avoir celle, prohibitive, imposée par la prise en compte de toutes les dérives possibles ou de toutes les dispersions de fabrication. On cherchera alors un système dans lequel la taille de cette mémoire est faible.

Le principe de l'invention repose, pour résoudre ces problèmes, sur l'utilisation de la logique floue. Dans l'invention, on effectue deux étapes principales qui sont de préférence complémentaires, mais pas nécessairement. Dans une première étape, on effectue un tarage en produisant un jeu de règles conditionnant l'appartenance d'un résultat de mesure à une plage donnée de résultat, à l'appartenance combinée des signaux délivrés par les capteurs à des plages de leur dynamique. Dans une deuxième étape, on met en oeuvre ces règles, ou des règles préétablies, pour, à partir de signaux de capteurs donnés, déduire le résultat de mesure recherché.

L'invention propose par ailleurs une approche particulière pour déterminer le jeu des règles conditionnant l'appartenance d'un résultat de mesure à une plage donnée.

L'invention a donc pour objet un procédé de tarage d'un appareil électronique, notamment d'une balance électronique, avec N capteurs électriques caractérisé en ce que

- on établit, notamment par mesure, des correspondances entre des valeurs de signaux des capteurs et des valeurs souhaitées d'un signal résultat de l'appareil,
- on définit sur la dynamique du signal de sortie de chaque capteur un nombre entier de fonctions d'appartenance en déterminant, pour chaque fonction d'appartenance, une plage de cette dynamique, et un coefficient, dit d'appartenance, de chaque valeur de ce signal de capteur à cette plage,
- on détermine des fonctions d'appartenance du signal résultat de l'appareil, avec pour chaque fonction d'appartenance du signal résultat, une plage de la dynamique de ce signal résultat, et un coefficient, dit d'appartenance, de chaque valeur de ce signal résultat à cette plage, et
- on établit des règles de composition de l'appartenance des valeurs des signaux des capteurs à des plages de signaux de capteurs qui conduisent à des appartenance du signal résultat de l'appareil à une des plages de signal résultat,
- on calcule un signal résultat correspondant à cette détermination et à cet établissement, et
- on modifie par approximations successives le nombre et la forme des fonction d'appartenance du signal résultat et le nombre et la nature des règles de composition pour que l'erreur moyenne entre une valeur souhaitée de signal résultat et une valeur calculée de signal résultat soit inférieure à un seuil.

L'invention a également pour objet un procédé de mesure avec un appareil électronique muni de N capteurs électriques, notamment d'un poids dans une balance, cet appareil étant éventuellement taré selon le procédé de la revendication 1, caractérisé en ce que

- on définit sur la dynamique du signal de sortie de chaque capteur un nombre entier de fonctions d'appartenance en déterminant, pour chaque fonction d'appartenance, une plage de cette dynamique, et un coefficient, dit d'appartenance, de chaque valeur de ce signal de capteur à cette plage,
- on détermine des fonctions d'appartenance du signal résultat de l'appareil, avec pour chaque fonction d'appartenance du signal résultat, une plage de la dynamique de ce signal résultat, et un coefficient, dit d'appartenance, de chaque valeur de ce signal résultat à cette plage, et
- on établit des règles de composition de l'appartenance des valeurs des signaux des capteurs à des plages de signaux de capteurs qui conduisent à des appartenance du signal résultat de l'appareil à une des plages de signal résultat,
- on calcule, pour chaque règle de composition une valeur de satisfaction,
- on compose, dans l'exemple décrit on multiplie, la valeur de satisfaction avec une valeur centrale de la fonction d'appartenance de résultat correspondant à cette règle,
- on traite les résultats de la composition, dans un exemple on en fait la moyenne pour produire un signal de mesure de l'appareil.

En pratique, dans l'invention, on effectue pour le tarage une ou des itérations sur la détermination des règles et des différentes fonctions d'appartenance. Pour la mesure, bien qu'on utilisera de préférence des règles ajoutées par tarage, il est possible, en supportant une très légère erreur, d'imposer des mêmes règles générales à tous les appareils d'une série.

L'invention sera mieux comprise à la lecture de la description qui suit et à l'examen des figures qui l'accompagnent. Celles-ci ne sont données qu'à titre indicatif et nullement limitatif de l'unité. Les figures montrent:

Fig 1 : une table de correspondance entre des valeurs de signaux de capteur et des valeurs souhaitées d'un signal résultat.

Fig 2 : un exemple de fonction d'appartenance définie sur la dynamique du signal de chaque capteur, de préférence après normalisation, ou sur la dynamique du signal résultat.

Fig 3 : un ensemble de règles de composition d'appartenance.

Fig 4 : un dispositif pour la mise en oeuvre du procédé.

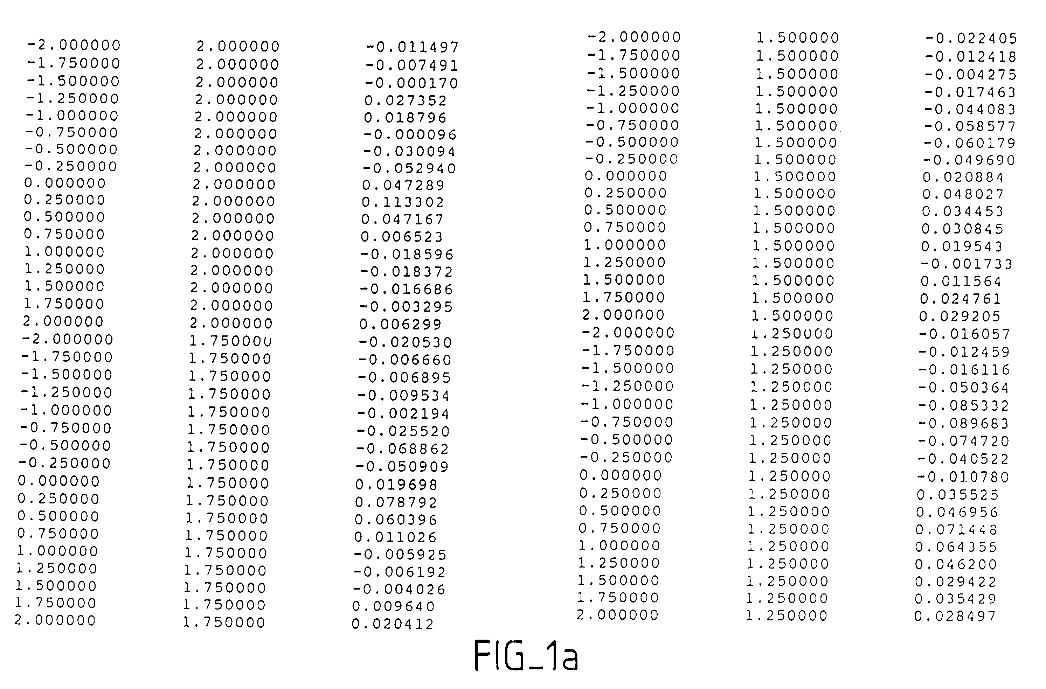

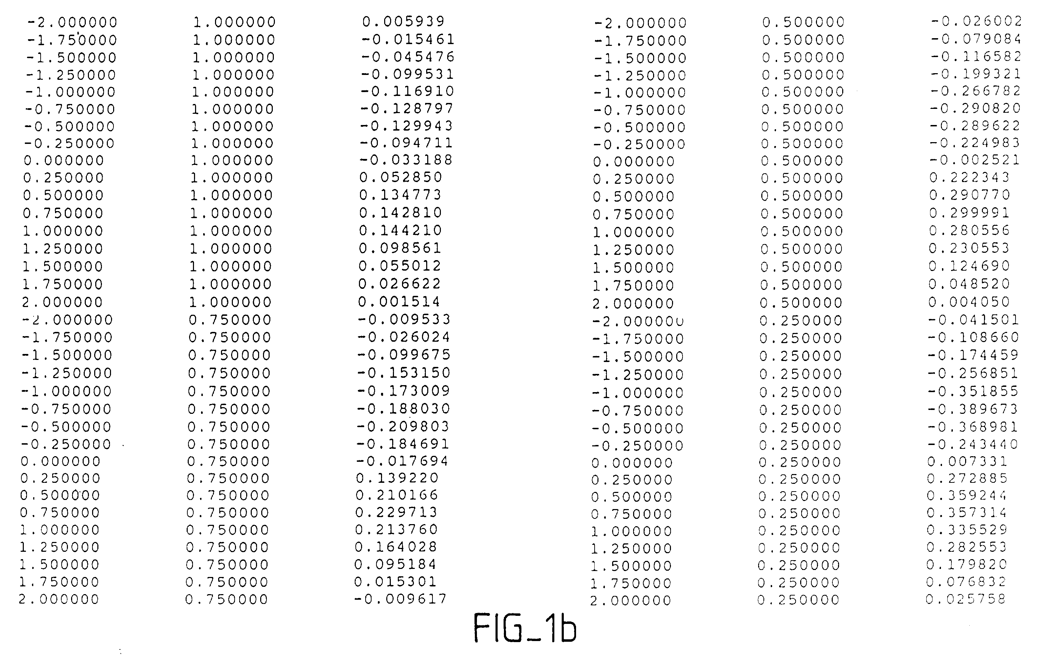

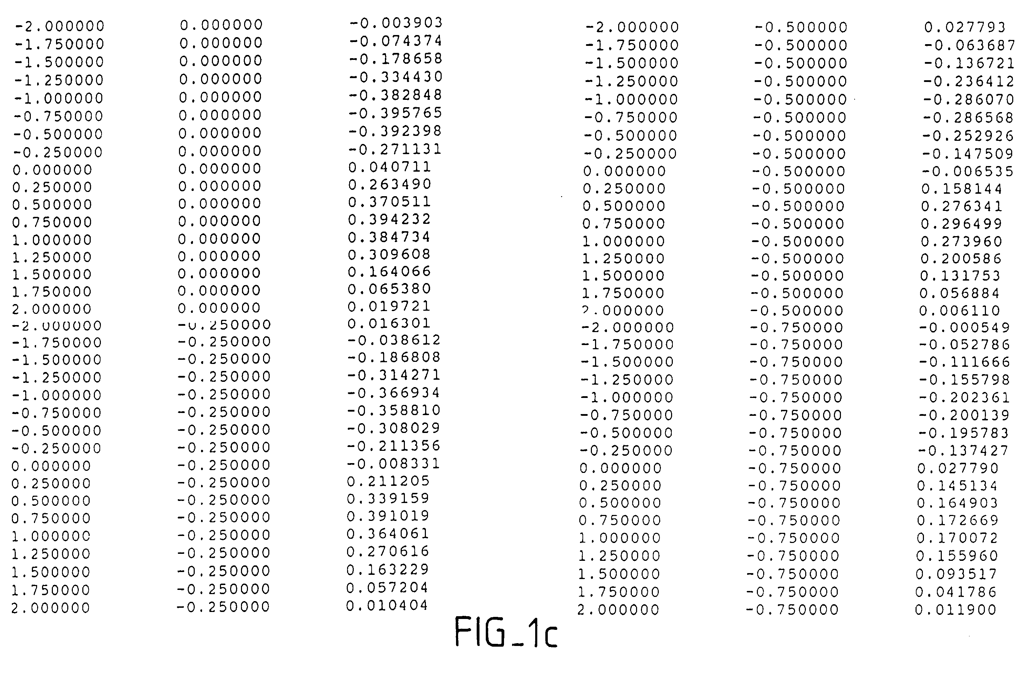

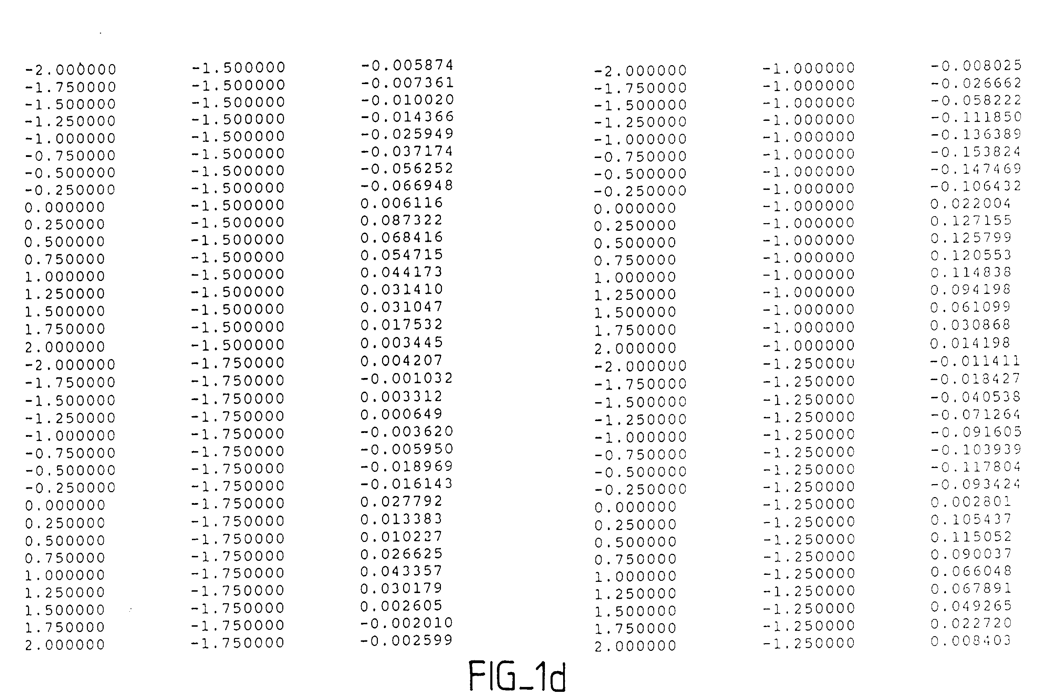

Pour mettre en oeuvre le procédé de l'invention, on établit donc une correspondance entre des valeurs des signaux des capteurs et des valeurs souhaitées du signal résultat. Sur les figures 1a, 1b, 1c, 1d et 1e, on a représenté à chaque fois deux tableaux de trois colonnes. La première colonne de chaque tableau indique, à chaque ligne, une valeur possible d'un signal d'un premier capteur. Par exemple, un signal d'un premier capteur, S1, prend des valeurs de - 2,000 000 à + 2,000 000 puis en bas de la colonne à nouveau de - 2,000 000 à + 2,000 000. Dans une deuxième colonne, un capteur, S2, est censé prendre une valeur unique, 2,000 000 en haut de la colonne et 1,750 000 en bas de la colonne. Il pourrait y avoir représentées les valeurs possibles d'un troisième capteur. La troisième colonne du premier tableau donne en correspondance la valeur souhaitée par le signal de mesure de la balance.

L'établissement des correspondances peut être théorique: il peut résulter d'une modélisation mathématique faite en laboratoire. Il peut aussi résulter plus simplement d'une mesure directe. On pose donc par exemple différents poids connus sur la balance, et pour chaque poids on mesure les signaux des capteurs S1, S2 et S3. Compte tenu de la connaissance du poids et d'un signal résultat qu'on veut afficher, on peut établir et stocker dans un fichier les correspondances indiquées ci-dessus.

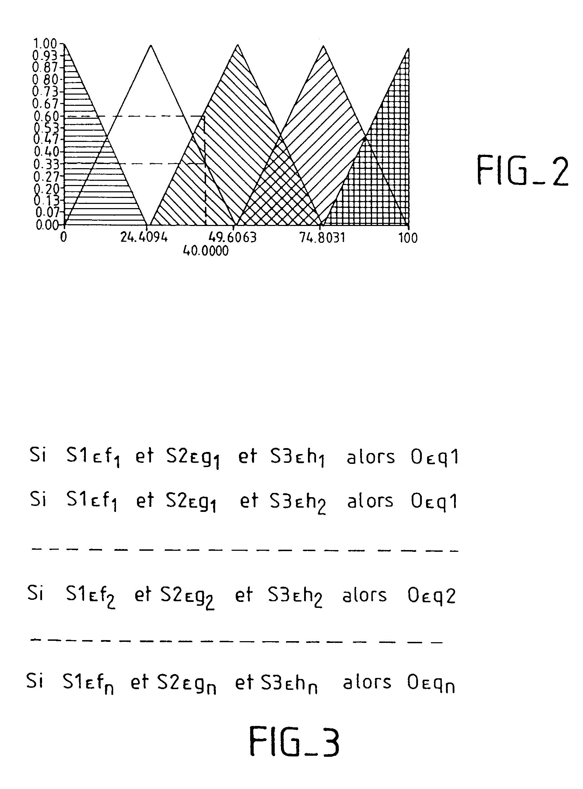

La figure 2 montre un exemple de fonction d'appartenance définie sur la dynamique d'un signal de capteur. Dans un exemple préféré, cette dynamique est évaluée, ici de - 2,000 000 à + 2,000 000, puis est normalisée entre 0 et 100. On dit alors que la variable S1, ou aussi l'antécédent S1, peut prendre des valeurs de 0 à 100. Sur cette dynamique, ici normalisée de 0 à 100, on définit des plages. Dans l'exemple, on a défini cinq plages respectivement : 0 - 24,4094; 0 - 49,6063; 24,4094 - 74,8031; 49,6063 - 100; et 74, 8031 - 100. On aurait pu en définir plus, mais la pratique de la logique floue conduit généralement à ce que le nombre de plages soit limité à huit. Ensuite, pour chaque valeur possible de S1 on définit, par la forme d'une fonction d'appartenance, un coefficient d'appartenance permettant d'évaluer combien une valeur peut être considérée comme appartenant à une plage.

Par exemple, la première plage concerne les valeurs très basses, la seconde, les valeurs basses, la troisième, les valeurs moyennes, la quatrième, les valeurs hautes et la cinquième, les valeurs très hautes. Pour une valeur donnée de S1, par exemple pour S1 = 0, la fonction d'appartenance exprime d'une manière quantifiée le fait que la valeur considérée appartient à la plage. Pour l'exemple indiqué, S1 = 0 appartient à la plage très basse avec le coefficient d'appartenance 1 et aux autres plages avec un coefficient 0. Dans un autre exemple, une autre valeur S1 = 40,000 appartient à la deuxième plage avec un coefficient de 0,33 et à la troisième plage avec un coefficient de 0,60. Elle appartient à toutes les autres plages avec un coefficient 0.

Les formes de fonctions d'appartenance peuvent être comme représentées ici des triangles isocèles, des courbes scalènes (triangle reposant sur une base avec un angle d'un côté différent de l'autre), des trapèzes, ou aussi de préférence des courbes gaussiennes dont l'expression du coefficient est:

Coefficient = exp $(-(x-m)^2/2s^2)$ où x représente la valeur de la variable, m la valeur moyenne de la fonction en cloche concernée et s l'écart type de cette fonction. Alors que les coefficients d'appartenance sont nuls pour l'extérieur de deux plages consécutives dans le cas ou les formes sont des triangles isocèles, des courbes scalènes, ou des trapèzes, ceci n'est pas le cas pour le cas des fonctions gaussiennes. La répartition de ces dernières doit cependant être telle que la somme des coefficients d'appartenance d'une valeur donnée à chacune des plages ne soit pas supérieure à 1. Pour la suite de l'exposé, on admettra que pour les N variables possibles, N=3 dans l'exemple, on a à M, M=5 dans l'exemple, fonctions d'appartenance réparties, entre très basse et très haute, sur la dynamique de chacun des signaux des capteurs. On appellera f1, f2, f3, f4, f5, g1, g2, g3, g4, g5 et h1, h2, h3, h4 et h5 les cinq fonctions ainsi définies correspondant aux signaux S1, S2 et S3 respectivement.

On effectue un même travail, simple en fait, pour le signal de résultat et on répartit sa dynamique sur cinq fonctions d'appartenance. On les notera provisoirement q1 à q5.

On préfère en général pour le signal résultat choisir des fonctions gaussiennes dont la forme est d'autant plus justifiée qu'il y a de variables, de capteurs, à prendre en considération.

Une fois que ces fonctions d'appartenance ont été ainsi déterminées, on recherche des règles de composition de l'appartenance des valeurs des signaux des capteurs à des plages de ces signaux de capteur qui conduisent à des appartenances du signal résultat de la balance a une des plages de signal résultat. Ainsi, figure 3, on a indiqué dans une première ligne que, si le signal S1 appartient à la plage très basse f1, le signal S2 à la plage très basse g1, et le signal S3 à la plage très basse h1 alors le signal résultat 0 appartiendra à la plage très basse q1. De la même façon, on a écrit que si le signal S1 appartient à la plage basse f2, le signal S2 à la plage basse g2, le signal S3 à la plage basse h2, alors le signal 0 appartient à la plage basse q2. Et ainsi de suite.

Dans le cas d'une balance, où les signaux des trois capteurs sont en principe tous directement proportionnels au poids de mesure, il n'y a pas de possibilité qu'un signal S1 très bas et un signal S2 très bas existent en présence d'un signal S3 très haut. Cependant, dans d'autres applications, cela pourrait se produire et, dans ce cas, il y aurait autant de règle d'appartenance que $M^N$ (ou MxPxQ si le nombre des fonctions d'appartenance n'est pas le même pour chaque variable). On remarquera néanmoins que ceci est le cas, même pour une balance à trois capteurs évoluant de concert si les fonctions d'appartenance sont gaussiennes. Elles ne sont nulles que pour des valeurs théoriquement infinies.

Pour le tarage, dans l'hypothèse de l'exemple avec trois signaux de capteur et un signal de résultat, on va utiliser une méthode dite du produit. Dans ce but, on effectue pour une fonction d'appartenance du résultat donné, par exemple, et pour les valeurs pour lesquelles cela a une signification, les calculs suivants :

$$r.fi(S1).gi(S2).hi(S3)= qi \text{ (valeur souhaitée).}$$

Cette expression permet, pour tous les cas où le produit fi(S1).gi(S2).hi(S3), est différent de zéro de déterminer un certain nombre de valeur de r. Par exemple, dans le fichier de la figure 1, dans les cas où la plage d'appartenance qi de la valeur souhaitée est centrale, valeur entre + 0,005 et - 0,005, par exemple, on a un certain nombre de lignes où les signaux S1 et S2 (S3 n'est pas figuré) sont présents. Si des règles prévoient pour la plage qi centrale de prendre en compte les plages fi-1, fi ou fi+ 1, et, gi-1, gi ou gi+1, et hi-1, hi ou hi+1, on utilise ces règles pour effectuer un calcul de r.

On obtient alors un certain nombre de valeur de r. Soit ces valeurs de r sont réparties selon une statistique gaussienne équivalente à la forme qi soit elle ne le sont pas. Cette équivalence se mesure avec une valeur moyenne de r devant être centrée sur une valeur optimum, par exemple 1 si la correspondance est normalisée, avec un écart type dépendant d'une précision souhaitée.

Lors de la première tentative, ce n'est normalement pas le cas. On divise donc alors la plage de qi en deux plages, par exemple contigües qi1 et qi2. On modifie ensuite les règles pour ne prendre en compte que celles qui sont concernées à chaque fois par une de ces plages et on réitère l'opération. Cette réitération peut être recommencée autant de fois que la précision souhaitée n'est pas atteinte. Les règle concernées par la modification sont, par exemple, celles où la fonction qi apparaissait et qui sont dupliquées pour faire apparaître les fonctions qi1 et qi2 à la place de qi

Parmi les règles théoriquement possibles, il y en a autant qu'il y a de plage pour chacune des variables, et de plages pour le signal résultat. Ainsi, en théorie avec cinq plages pour S1, S2 et S3 et cinq plages pour le résultat 0, il y a a priori 625 règles théoriques. Parmi celles-ci, environ une quarantaine seulement sont réalistes. Réaliste signifie que les coefficients d'appartenance des variables de la règle sont tous non nuls ou non négligeables. Quand on augmente le nombre de plages résultats, ainsi que c'est indiqué, on crée un grand nombre de règles théoriques. Par exemple, si le nombre de plages du signal résultat passe de 5 à 6 (qi devenant qi1 et qi2) le nombre de règles devrait passer de 625 à 750. En pratique, le nombre des règles utiles passent de 40 à 45 ou 46.

Ainsi de suite, on affine le résultat jusqu'à ce que la précision désirée de l'approximation avec la logique floue soit atteinte. Dans un exemple, compte tenu de la distorsion de la courbe de mesure d'un appareil, on s'est rendu compte qu'une quarantaine de plages pour le signal résultat, et moins de deux cents règles de compositions restent au bout du traitement.

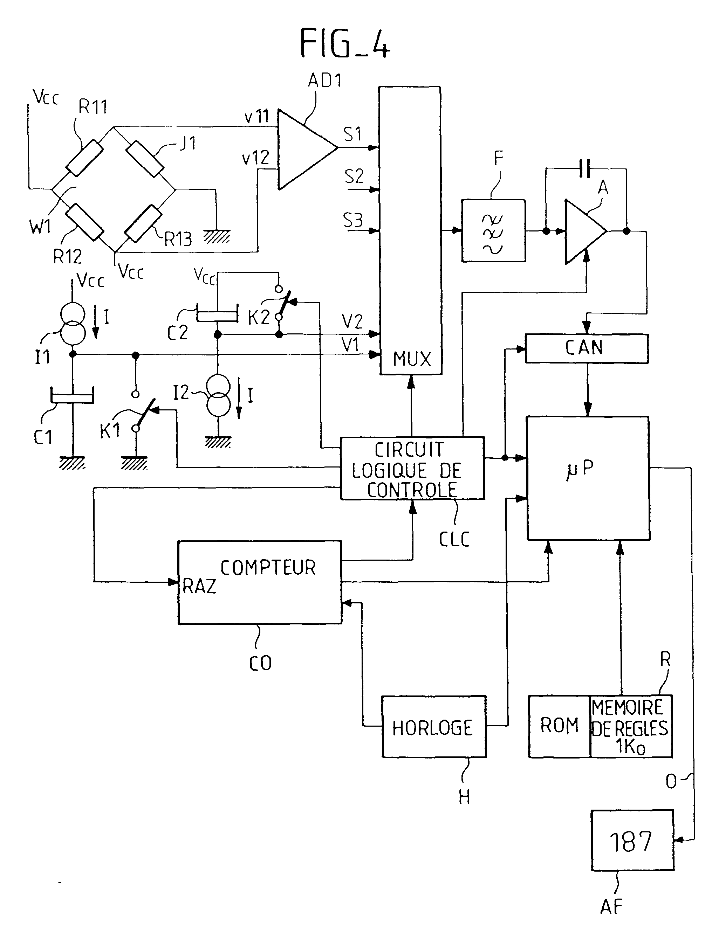

La figure 4 montre un pont de Wheastone W1 dans lequel une jauge de contrainte J1 est alimentée par un jeu de résistance R11 à R13 entre Vcc et la masse. Aux points milieux de W1 on prélève des tensions v11 et v12 qui sont appliquées sur les entrées d'un amplificateur différentiel AD1. Cet amplificateur AD1 délivre un signal de tension S1. Il en est de même de deux autres ponts de Wheastone W2 W3, non représentés, délivrant des signaux S2 et S3. Ces signaux S1, S2, S3 sont les signaux de pesage évoqués ci-dessus. Ils pourraient néanmoins être produits autrement que par des ponts de Wheastone, ou même provenir d'un autre appareil qu'un appareil de pesage.

Les signaux S1, S2 et S3 sont multiplexés dans un multiplexeur MUX cadencé par un circuit logique de contrôle CLC. Ils sont donc tour à tour délivré à la sortie du multiplexeur MUX pour être introduits dans un filtre passe bas F qui élimine les parasites. Les signaux S1, S2, S3 filtrés sont ensuite amplifiés par un amplificateur A. De préférence l'amplificateur A est un amplificateur intégrateur (à grand gain), à gain variable, et commandé et cadencé par le circuit CLC. Le fait qu'il soit à gain variable permet de normaliser les mesures comme évoqué plus haut. Le cadencement est lié au multiplexage. Chaque signal de capteur est traité à son tour avec ses propres conditions d'amplification.

Un convertisseur analogique numérique CAN permet de disposer des états binaires représentatifs de chaque échantillon des signaux S1, S2 et S3 qui lui sont transmis pas l'amplificateur A. Ces états binaires sont envoyés à un microprocesseur µP de préférence du type flou.

Le microprocesseur µP est d'une manière connues en relation avec une mémoire programme ROM, une mémoire de règles R, un afficheur AF, une horloge H et le circuit CLC. Le petit nombre de règles (200) et de fonctions d'appartenance peut être mémorisé dans une mémoire de moins d'un kilo-octet.

Au moment du tarage, on met en oeuvre avec le microprocesseur µP et le programme contenu dans la mémoire ROM l'algorithme décrit ci-dessus. Au moment de la mesure, le microprocesseur µP compare chaque valeur des signaux S1, S2, S3 aux plages des capteurs. Pour chaque signaux, et chaque plage, il détermine un coefficient d'appartenance dépendant du profil de la fonction d'appartenance pour la plage et de la valeur du signal du capteur. Quand les fonction d'appartenance sont isocèle, seules deux fonction d'appartenance permettent de déterminer des coefficients différents de 0.

Pour déterminer la valeur du résultat, il y a deux méthodes: la méthode produit indiquée plus haut et la méthode du minimum. Afin d'être complet, on va décrire l'élaboration d'un résultat selon la méthode du minimum. On restera dans l'exemple indiqué ci-dessus avec cinq fonction d'appartenance f1-f5, g1-g5, et h1-h5, pour les signaux S1 à S3 respectivement. On peut avoir des résultats (arbitraires) suivants:

S1 appartient à fn avec un coefficient 0,20
S1 appartient à fn+1 avec un coefficient 0,25
S2 appartient à gn avec un coefficient 0,19
S2 appartient à gn+1 avec un coefficient 0,14
S3 appartient à hn avec un coefficient 0,41
S3 appartient à hn+1 avec un coefficient 0,53

On admet que pour toutes les autres plages les coefficients sont nuls (fonctions isocèles) ou bien trop petits pour être significatifs (fonctions gaussiennes).

On prélève alors dans les règles celles concernant des triplets fn, gn, hn ou fn, gn, hn+1, ou fn, gn+1, hn etc... dans lesquels ces fonctions apparaissent.

Par exemple on aura les règles suivantes:

I si S1 appartient à fn, S2 à gn et S3 à hn, alors 0 appartient à qi
II si S1 appartient à fn, S2 à gn et S3 à hn+1, alors 0 appartient à qi
III si S1 appartient à fn, S2 à gn+1 et S3 à hn, alors 0 appartient à qi
IV si S1 appartient à fn, S2 à gn+1 et S3 à hn+1, alors 0 appartient à qj
...
VIII si S1 appartient à fn+1, S2 à gn+1 et S3 à hn+1, alors 0 appartient à qk

Dans l'exemple indiqué cela conduit à

I 0,20; 0,19; 0,41 et 0 appartient à qi
II 0,20; 0,19; 0,53 et 0 appartient à qi
...
IV 0,20; 0,14; 0,53 et 0 appartient à qj
...
VIII 0,25; 0,14; 0,53 et 0 appartient à qk

La méthode du minimum est telle que, pour chaque règle, par exemple ligne I, on dit que le signal de sortie O appartient à la fonction qi avec un coefficient qui est le minimum de ceux concernés par la règle. Autrement dit, pour la règle I, le signal résultat est 0,19 fois la valeur moyenne de la fonction qi. De même pour la règle II, le résultat est 0,19 fois la valeur moyenne de la fonction qi. Pour la règle IV, c'est 0,14 fois la valeur moyenne de la fonction qj... Pour la règle VIII c'est 0,14 fois la valeur moyenne de la fonction qk.

Ainsi de suite, on prend en compte toutes les règles pour lesquelles les coefficients d'appartenance sont tous significatifs. Le résultat général est la moyenne, sur le nombre des règles prises en compte, des résultats de chaque règle prise en compte. Ici il vient

$$0 = (0,19 \text{ qi} + 0,19 \text{ qi} +...+ 0,14 \text{ qj} +...+ 0,14 \text{ qk})/8$$

Le dispositif de mesure mis en oeuvre dans l'invention peut être perfectionné. Ce perfectionnement concerne d'une part la création d'une variable, ou plus exactement de N variables, supplémentaires : le temps. Il concerne également le fait que cette ou ces variables vont également être testées par le système de logique flou. Le fonctionnement de ce perfectionnement est le suivant.

Alors qu'une information de mesure est disponible, après éventuellement amplification filtrage et conversion, presque immédiatement (quelques nanosecondes après sa production par le capteur) on produit par ailleurs deux signaux de rampe évoluant linéairement avec le temps. Un premier signal évolue en croissant d'une valeur inférieure à une valeur supérieure, l'autre évolue à l'inverse entre les mêmes bornes. Les valeurs inférieures et supérieures sont celles de la dynamique d'un capteur surveillé. Au moyen d'un compteur, on compte le temps passé depuis le déclenchement des signaux de rampe. Avec des comparateurs on détecte les instants où ces signaux de rampe sont égaux au signal d'un capteur. On dispose alors de deux temps. En prenant la précaution que les rampes soient de même pente (ou si elles ne le sont pas en corrigeant) on peut avec l'addition des temps obtenus vérifier que la durée totale correspond bien à la dynamique du signal de mesure.

En effet, ces signaux de rampe ont exploré une course égale à la différence entre la valeur inférieure et la valeur du signal du capteur et entre la valeur du signal du capteur et la valeur supérieure.

Pour constituer les signaux de rampe, figure 4, au début de la mesure on ferme pendant un court instant deux interrupteurs K1 et K2. Ces deux interrupteurs, portent alors brutalement les deux bornes des condensateurs, C1 et C2, auxquels ils sont respectivement branchés en parallèle à des potentiels respectivement Vcc et 0 volt.

Lorsque K1 et K2 sont réouverts, le circuit logique de contrôle CLC déclenche un compteur CO. Le premier condensateur C1 est en même temps connecté, par une source I1 de courant I entre Vcc et la masse. Le deuxième condensateur C2 est connecté par une source I2, également de courant I, entre la masse et Vcc. Le premier condensateur CI se charge par I tandis que C2 se décharge par I. Aux points milieux entre les condensateurs et les sources de courant on prélève des signaux V1 et V2 respectivement croissants et décroissants. Les signaux V1 et V2 sont transmis au microprocesseur μP par la même chaîne que les signaux S1, S2 et S3. Ils subissent des traitements comparables. Dans le microprocesseur μP les signaux V1 et V2 sont comparés à chacun des signaux S1, S2 et S3.

On détecte avec le microprocesseur μP les instants où ces signaux sont égaux respectivement à S1, S2 ou S3. Ces instants d'égalité sont dénommés ici TV1S1, TV2S1, ... TV2S3 pour montrer l'égalité de la tension V1 au signal S1, de la tension V2 au signal S1, etc... de la tension V2 au signal S3. A ces instants, le microprocesseur μP prélève l'état du compteur. Les états sont COV1S1, COV2S1 etc... Selon ce qui a été indiqué précédemment, la somme en binaire de l'état COV1S1 et de l'état COV2S1 devrait être toujours la même. C'est un bon moyen de détecter le bon fonctionnement du système.

En fait, en choisissant des sources I1 et I2 de courant I dont la valeur est fonction de la tension Vcc qui alimente les capteurs, on peut, en substituant les états COV1S1, COV1S2 et COV1S3 aux signaux S1, S2, S3 respectivement s'affranchir de la variation de la tension d'alimentation, en définitive , de l'usure des piles mises en place dans un pèse-personnes. On peut en effet montrer que, sous réserve que le courant I soit proportionnel à la tension VCC, le temps additionné en devient indépendant.

Pour le traitement des signaux COV1S1,... on crée une classe N+1 (N+1=4) de fonctions d'appartenance : celle relative au temps. Pour cette classe, il n'y a qu'une seule fonction d'appartenance, par exemple une fonction dite très haute, de forme rectangulaire, valant 1 lorsque le temps additionné est égal à un temps de référence, et valant 0 dans le cas contraire. On utilise alors, dans chaque règle une condition complémentaire par laquelle on vérifie que le temps additionné appartient à la fonction d'appartenance très haute. On prévient ainsi les effets de la dérive de la tension de mesure sur les capteurs alors que ces effets auraient été par ailleurs sans influence sur le fonctionnement du reste du circuit, notamment du microprocesseur μP, dont les tolérances de fonctionnement sont généralement larges : par exemple, de 1,5 V à 8V. Dans de telles conditions tout le système peut être intégré sur un seul circuit intégré.

## Revendications

1. Procédé de tarage d'un appareil électronique, notamment d'une balance électronique, avec N capteurs électriques caractérisé en ce que

   - on établit, notamment par mesure, des correspondances entre des valeurs de signaux des capteurs et des valeurs souhaitées d'un signal résultat de l'appareil,
   - on définit sur la dynamique du signal de sortie de chaque capteur un nombre entier de fonctions d'appartenance en déterminant, pour chaque fonction d'appartenance, une plage de cette dynamique, et un coefficient, dit d'appartenance, de chaque valeur de ce signal de capteur à cette plage,

- on détermine des fonctions d'appartenance du signal résultat de l'appareil, avec pour chaque fonction d'appartenance du signal résultat, une plage de la dynamique de ce signal résultat, et un coefficient, dit d'appartenance, de chaque valeur de ce signal résultat à cette plage, et
- on établit des règles de composition de l'appartenance des valeurs des signaux des capteurs à des plages de signaux de capteurs qui conduisent à des appartenance du signal résultat de l'appareil à une des plages de signal résultat,
- on calcule un signal résultat correspondant à cette détermination et à cet établissement, et
- on modifie par approximations successives le nombre et la forme des fonction d'appartenance du signal résultat et le nombre et la nature des règles de composition pour que l'erreur moyenne entre une valeur souhaitée de signal résultat et une valeur calculée de signal résultat soit inférieure à un seuil.

2. Procédé selon la revendication 1, caractérisé en ce que

- on répartit régulièrement les plages des fonctions d'appartenance des capteurs.

3. Procédé selon l'une des revendications 1 à 2, caractérisé en ce que

- on choisit pour les fonctions d'appartenance des formes gaussiennes.

4. Procédé selon l'une des revendications 1 à 2, caractérisé en ce que

- on choisit pour les fonctions d'appartenance des formes isocèles.

5. Procédé selon l'une des revendications 1 à 2, caractérisé en ce que

- on choisit pour les fonctions d'appartenance des formes scalènes.

6. Procédé de mesure avec un appareil électronique muni de N capteurs électriques, notamment d'un poids dans une balance, caractérisé en ce que

- on définit sur la dynamique du signal de sortie de chaque capteur un nombre entier de fonctions d'appartenance en déterminant, pour chaque fonction d'appartenance, une plage de cette dynamique, et un coefficient, dit d'appartenance, de chaque valeur de ce signal de capteur à cette plage,

- on détermine des fonctions d'appartenance du signal résultat de l'appareil, avec pour chaque fonction d'appartenance du signal résultat, une plage de la dynamique de ce signal résultat, et un coefficient, dit d'appartenance, de chaque valeur de ce signal résultat à cette plage, et
- on établit des règles de composition de l'appartenance des valeurs des signaux des capteurs à des plages de signaux de capteurs qui conduisent à des appartenance du signal résultat de l'appareil à une des plages de signal résultat,
- on calcule, pour chaque règle de composition une valeur de satisfaction,
- on compose la valeur de satisfaction avec une valeur de la fonction d'appartenance de résultat correspondant à cette règle,
- on traite les résultats de la composition, dans une exemple on en fait la moyenne, pour produire un signal de mesure de l'appareil.

7. Procédé selon la revendication 6, caractérisé en ce que

- on calcule la valeur de satisfaction en choisissant dans chaque règle le minimum des coefficients d'appartenance des signaux des différents capteurs.

8. Procédé selon l'une des revendications 1 à 7, caractérisé en ce que

- on fait varier un premier signal croissant en fonction du temps, et un deuxième signal décroissant en fonction du temps,
- on compare ces deux signaux à un signal de mesure,
- on mesure les temps où une égalité se produit,
- on additionne les deux temps,
- on définit sur la dynamique du signal de temps additionné une fonction d'appartenance temporelle,
- on attribue un coefficient d'appartenance à la valeur du temps additionné, et
- on modifie les règles pour y incorporer une condition relative à cette fonction d'appartenance temporelle.

9. Procédé selon l'une des revendications 6 à 8, caractérisé en ce que

- on compose les valeurs de satisfaction selon le mode du minimum.

10. Procédé selon l'une des revendications 6 à 8, caractérisé en ce que

- on compose les valeurs de satisfaction selon le mode produit.

**Patentansprüche**

1. Verfahren zum Abgleichen eines elektronischen Gerätes, insbesondere einer elektronischen Waage, mit N elektrischen Aufnehmern, dadurch gekennzeichnet, daß

   - Zusammenhänge insbesondere durch Messen zwischen Signalwerten der Aufnehmer und gewünschten Werten eines Ergebnissignals des Gerätes hergestellt werden,

   - auf der Dynamik des Ausgangssignals jedes Aufnehmers eine ganze Zahl von Zuordnungsfunktionen definiert werden, indem für jede Zuordnungsfunktion ein Bereich dieser Dynamik und ein Koeffizient, Zuordnung genannt, zu jedem Wert dieses Aufnehmersignals zu diesem Bereich gebildet wird,

   - Zuordnungsfunktionen des Ergebnissignals des Gerätes mit einem Dynamikbereich dieses Ergebnissignals für jede Zuordnungsfunktion des Ergebnissignals und ein Koeffizient, Zuordnung genannt, jedes Wertes des Ergebnissignals zu diesem Bereich festgelegt wird, und

   - Zusammensetzungsregeln für die Zuordnung von Signalwerten der Aufnehmer zu den Signalbereichen der Aufnehmer vereinbart werden, die zu Zuordnungen des Ergebnissignals des Gerätes zu einem der Bereiche des Ergebnissignals führen,

   - ein Ergebnissignal berechnet wird, das dieser Festlegung und dieser Vereinbarung entspricht, und

   - durch sukzessive Approximierung die Zahl und Form der Zuordnungsfunktionen des Ergebnissignals und die Zahl und Eigenschaft der Zusammensetzungsregeln modifiziert werden, um den mittleren Fehler zwischen dem gewünschten Wert des Ergebnissignals und einem berechneten Wert des Ergebnissignals unter eine Schwelle zu drücken.

2. Verfahren nach Anspruch 1, dadurch gekennzeichnet, daß die Bereiche der Zuordnungsfunktionen der Aufnehmer gleichmäßig verteilt sind.

3. Verfahren nach einem der Ansprüche 1 oder 2, dadurch gekennzeichnet, daß die Zuordnungsfunktionen Gauß-förmig sind.

4. Verfahren nach einem der Ansprüche 1 oder 2, dadurch gekennzeichnet, daß die Zuordnungsfunktionen gleichschenklig sind.

5. Verfahren nach einem der Ansprüche 1 oder 2, dadurch gekennzeichnet, daß die Zuordnungsfunktionen ungleichschenklig sind.

6. Verfahren zum Messen mit einem elektronischen Gerät mit N elektrischen Aufnehmern, insbesondere eines Gewichts bei einer Waage, wobei dieses Gerät gemäß dem Verfahren nach Anspruch 1 ausgeglichen worden ist, dadurch gekennzeichnet, daß

   - auf der Dynamik des Ausgangssignals jedes Aufnehmers eine ganze Zahl von Zuordnungsfunktionen definiert wird, indem für jede Zuordnungsfunktion ein Bereich dieser Dynamik und ein Koeffizient, Zuordnung genannt, von jedem Wert des Signals des Aufnehmers zu diesem Bereich festgelegt wird,

   - Zuordnungsfunktionen des Ergebnissignals des Gerätes mit einem Dynamikbereich dieses Ergebnissignals für jede Zuordnungsfunktion des Ergebnissignals und ein Koeffizient, Zuordnung genannt, von jedem Wert dieses Ergebnissignals zu diesem Bereich festgelegt wird, und

   - Zusammensetzungsregeln für die Zuordnung der Signalwerte der Aufnehmer zu den Bereichen der Signale der Aufnehmer festgelegt werden, die zur Zuordnung des Ergebnissignals des Gerätes zu einem der Bereiche des Ergebnissignals führen,

   - für jede Zusammensetzungsregel ein Trefferwert berechnet wird,

   - der Trefferwert mit einem Wert der Zuordnungsfunktion für das Ergebnis entsprechend dieser Regel zusammengesetzt wird,

   - die Ergebnisse dieser Zusammensetzung, zum Beispiel durch Bilden des Durchschnitts, verarbeitet werden, um ein Meßsignal des Gerätes zu erzeugen.

7. Verfahren nach Anspruch 6, dadurch gekennzeichnet, daß der Trefferwert berechnet wird, indem in jeder Regel das Minimum der Zuordnungskoeffizienten der Signale von unterschiedlichen Aufnehmern gewählt wird.

8. Verfahren nach einem der Ansprüche 1 bis 7, dadurch gekennzeichnet, daß

- ein erstes Signal mit der Zeit ansteigen gelassen wird und ein zweites Signal mit der Zeit abfallen gelassen wird,

- die zwei Signale mit einem Meßsignal verglichen werden,

- die Zeit bis zu einer Gleichheit gemessen wird,

- die zwei Zeiten addiert werden,

- auf der Dynamik des Signals der addierten Zeit eine temporäre Zuordnungsfunktion definiert wird,

- ein Zuordnungskoeffizient dem Wert der addierten Zeit zugeordnet wird, und

- die Regeln modifiziert werden, um darin eine Bedingung bezüglich dieser temporären Zuordnungsfunktion einzubinden.

9. Verfahren nach einem der Ansprüche 6 bis 8, dadurch gekennzeichnet, daß

- die Trefferwerte entsprechend der Minimumweise zusammengesetzt werden.

10. Verfahren nach einem der Ansprüche 6 bis 8, dadurch gekennzeichnet, daß

- die Trefferwerte entsprechend der erzeugten Weise zusammengesetzt werden.

## Claims

1. A method for calibrating an electronic appliance, in particular electronic scales, having N electrical sensors,
   **characterised in that**

   - correspondences are established, especially by measurement, between signal values of the sensors and desired values of a signal result of the appliance,
   - on the dynamics of the output signal of each sensor a whole number of membership functions is defined, by determining, for each membership function, a range of these dynamics, and a coefficient, known as the membership coefficient, of each value of this sensor signal to this range,
   - membership functions of the signal result of the appliance are determined, with for each membership function of the signal result, a range of the dynamics of this signal result, and a coefficient, known as the membership coefficient, of each value of this signal result to this range, and

- composition rules are established for the membership of the values of the signals of the sensors to sensor signals ranges which result in membership of the result signal of the appliance to one of the signal result ranges,
- a signal result corresponding to this determination and to this established is calculated, and
- the number and the shape of the membership functions of the signal result and the number and the nature of the composition rules are modified by successive approximations so that the mean error between a desired signal result value and a calculated signal result value is less than a threshold.

2. A method according to Claim 1,
   **characterised in that**

   - the ranges of the membership functions of the sensors are regularly distributed.

3. A method according to one of Claims 1 to 2,
   **characterised in that**

   - gaussian shapes are chosen for the membership functions.

4. A method according to one of Claims 1 to 2,
   **characterised in that**

   - isosceles shapes are chosen for the membership functions.

5. A method according to one of Claims 1 to 2,
   **characterised in that**

   - scalene shapes are chosen for the membership functions.

6. A measurement method with an electronic appliance equipped with N electrical sensors, especially a weight in a scales, this appliance being calibrated in accordance with the method of Claim 1,
   **characterised in that**

   - on the dynamics of the output signal of each sensor a whole number of membership functions is defined by determining, for each membership function, a range of these dynamics, and a coefficient, known as the membership coefficient, of each value of this sensor signal to this range,
   - membership functions of the signal result of the appliance are determined, with for each membership function of the signal result, a range of the dynamics of this signal result, and a coefficient, known as the membership coefficient, of each value of this signal result to this range, and

- composition rules are established for the membership of the values of the signals of the sensors to sensor signal ranges which result in the membership of the signal result of the appliance to one of the signal result ranges,
- for each composition rule a satisfactory value is calculated,
- the satisfactory value is composed with a result value of the membership function corresponding to this rule,
- the results of the composition are processed, in one example the mean is taken, to produce a measurement signal of the appliance.

7. A method according to Claim 6, **characterised in that**

- the satisfactory value is calculated by choosing in each rule the minimum of the membership coefficients of the signals of the various sensors.

8. A method according to one of Claims 1 to 7, **characterised in that**

- a first signal increasing as a function of time and a second signal decreasing as a function of time are made to vary,
- these two signals are compared with a measurement signal,
- the times in which an equality is produced are measured,
- the two times are added,
- on the dynamics of the added time signal a temporal membership function is defined,
- a membership coefficient is attributed to the value of the added time, and
- the rules are modified to incorporate a condition relating to this temporal membership function.

9. A method according to one of Claims 6 to 8, **characterised in that**

- the satisfactory values are composed according to the mode of the minimum

10. A method according to one of Claims 6 to 8, **characterised in that**

- the satisfactory values are composed according to the produced mode.

| | | | | | |
|---|---|---|---|---|---|
| -2.000000 | 2.000000 | -0.011497 | -2.000000 | 1.500000 | -0.022405 |
| -1.750000 | 2.000000 | -0.007491 | -1.750000 | 1.500000 | -0.012418 |
| -1.500000 | 2.000000 | -0.000170 | -1.500000 | 1.500000 | -0.004275 |
| -1.250000 | 2.000000 | 0.027352 | -1.250000 | 1.500000 | -0.017463 |
| -1.000000 | 2.000000 | 0.018796 | -1.000000 | 1.500000 | -0.044083 |
| -0.750000 | 2.000000 | -0.000096 | -0.750000 | 1.500000 | -0.058577 |
| -0.500000 | 2.000000 | -0.030094 | -0.500000 | 1.500000 | -0.060179 |
| -0.250000 | 2.000000 | -0.052940 | -0.250000 | 1.500000 | -0.049690 |
| 0.000000 | 2.000000 | 0.047289 | 0.000000 | 1.500000 | 0.020884 |
| 0.250000 | 2.000000 | 0.113302 | 0.250000 | 1.500000 | 0.048027 |
| 0.500000 | 2.000000 | 0.047167 | 0.500000 | 1.500000 | 0.034453 |
| 0.750000 | 2.000000 | 0.006523 | 0.750000 | 1.500000 | 0.030845 |
| 1.000000 | 2.000000 | -0.018596 | 1.000000 | 1.500000 | 0.019543 |
| 1.250000 | 2.000000 | -0.018372 | 1.250000 | 1.500000 | -0.001733 |
| 1.500000 | 2.000000 | -0.016686 | 1.500000 | 1.500000 | 0.011564 |
| 1.750000 | 2.000000 | -0.003295 | 1.750000 | 1.500000 | 0.024761 |
| 2.000000 | 2.000000 | 0.006299 | 2.000000 | 1.500000 | 0.029205 |
| -2.000000 | 1.750000 | -0.020530 | -2.000000 | 1.250000 | -0.016057 |
| -1.750000 | 1.750000 | -0.006660 | -1.750000 | 1.250000 | -0.012459 |
| -1.500000 | 1.750000 | -0.006895 | -1.500000 | 1.250000 | -0.016116 |
| -1.250000 | 1.750000 | -0.009534 | -1.250000 | 1.250000 | -0.050364 |
| -1.000000 | 1.750000 | -0.002194 | -1.000000 | 1.250000 | -0.085332 |
| -0.750000 | 1.750000 | -0.025520 | -0.750000 | 1.250000 | -0.089683 |
| -0.500000 | 1.750000 | -0.068862 | -0.500000 | 1.250000 | -0.074720 |
| -0.250000 | 1.750000 | -0.050909 | -0.250000 | 1.250000 | -0.040522 |
| 0.000000 | 1.750000 | 0.019698 | 0.000000 | 1.250000 | -0.010780 |
| 0.250000 | 1.750000 | 0.078792 | 0.250000 | 1.250000 | 0.035525 |
| 0.500000 | 1.750000 | 0.060396 | 0.500000 | 1.250000 | 0.046956 |
| 0.750000 | 1.750000 | 0.011026 | 0.750000 | 1.250000 | 0.071446 |
| 1.000000 | 1.750000 | -0.005925 | 1.000000 | 1.250000 | 0.064355 |
| 1.250000 | 1.750000 | -0.006192 | 1.250000 | 1.250000 | 0.046200 |
| 1.500000 | 1.750000 | -0.004026 | 1.500000 | 1.250000 | 0.029422 |
| 1.750000 | 1.750000 | 0.009640 | 1.750000 | 1.250000 | 0.035429 |
| 2.000000 | 1.750000 | 0.020412 | 2.000000 | 1.250000 | 0.028497 |

FIG_1a

| | | | | | |
|---|---|---|---|---|---|
| -2.000000 | 1.000000 | 0.005939 | -2.000000 | 0.500000 | -0.026002 |
| -1.750000 | 1.000000 | -0.015461 | -1.750000 | 0.500000 | -0.079084 |
| -1.500000 | 1.000000 | -0.045476 | -1.500000 | 0.500000 | -0.116582 |
| -1.250000 | 1.000000 | -0.099531 | -1.250000 | 0.500000 | -0.199321 |
| -1.000000 | 1.000000 | -0.116910 | -1.000000 | 0.500000 | -0.266782 |
| -0.750000 | 1.000000 | -0.128797 | -0.750000 | 0.500000 | -0.290820 |
| -0.500000 | 1.000000 | -0.129943 | -0.500000 | 0.500000 | -0.289622 |
| -0.250000 | 1.000000 | -0.094711 | -0.250000 | 0.500000 | -0.224983 |
| 0.000000 | 1.000000 | -0.033188 | 0.000000 | 0.500000 | -0.002521 |
| 0.250000 | 1.000000 | 0.052850 | 0.250000 | 0.500000 | 0.222343 |
| 0.500000 | 1.000000 | 0.134773 | 0.500000 | 0.500000 | 0.290770 |
| 0.750000 | 1.000000 | 0.142810 | 0.750000 | 0.500000 | 0.299991 |
| 1.000000 | 1.000000 | 0.144210 | 1.000000 | 0.500000 | 0.280556 |
| 1.250000 | 1.000000 | 0.098561 | 1.250000 | 0.500000 | 0.230553 |
| 1.500000 | 1.000000 | 0.055012 | 1.500000 | 0.500000 | 0.124690 |
| 1.750000 | 1.000000 | 0.026622 | 1.750000 | 0.500000 | 0.048520 |
| 2.000000 | 1.000000 | 0.001514 | 2.000000 | 0.500000 | 0.004050 |
| -2.000000 | 0.750000 | -0.009533 | -2.000000 | 0.250000 | -0.041501 |
| -1.750000 | 0.750000 | -0.026024 | -1.750000 | 0.250000 | -0.108660 |
| -1.500000 | 0.750000 | -0.099675 | -1.500000 | 0.250000 | -0.174459 |
| -1.250000 | 0.750000 | -0.153150 | -1.250000 | 0.250000 | -0.256851 |
| -1.000000 | 0.750000 | -0.173009 | -1.000000 | 0.250000 | -0.351855 |
| -0.750000 | 0.750000 | -0.188030 | -0.750000 | 0.250000 | -0.389673 |
| -0.500000 | 0.750000 | -0.209803 | -0.500000 | 0.250000 | -0.368981 |
| -0.250000 | 0.750000 | -0.184691 | -0.250000 | 0.250000 | -0.243440 |
| 0.000000 | 0.750000 | -0.017694 | 0.000000 | 0.250000 | 0.007331 |
| 0.250000 | 0.750000 | 0.139220 | 0.250000 | 0.250000 | 0.272885 |
| 0.500000 | 0.750000 | 0.210166 | 0.500000 | 0.250000 | 0.359244 |
| 0.750000 | 0.750000 | 0.229713 | 0.750000 | 0.250000 | 0.357314 |
| 1.000000 | 0.750000 | 0.213760 | 1.000000 | 0.250000 | 0.335529 |
| 1.250000 | 0.750000 | 0.164028 | 1.250000 | 0.250000 | 0.282553 |
| 1.500000 | 0.750000 | 0.095184 | 1.500000 | 0.250000 | 0.179820 |
| 1.750000 | 0.750000 | 0.015301 | 1.750000 | 0.250000 | 0.076832 |
| 2.000000 | 0.750000 | -0.009617 | 2.000000 | 0.250000 | 0.025758 |

FIG_1b

| | | | | | |
|---|---|---|---|---|---|
| -2.000000 | 0.000000 | -0.003903 | -2.000000 | -0.500000 | 0.027793 |
| -1.750000 | 0.000000 | -0.074374 | -1.750000 | -0.500000 | -0.063687 |
| -1.500000 | 0.000000 | -0.178658 | -1.500000 | -0.500000 | -0.136721 |
| -1.250000 | 0.000000 | -0.334430 | -1.250000 | -0.500000 | -0.236412 |
| -1.000000 | 0.000000 | -0.382848 | -1.000000 | -0.500000 | -0.286070 |
| -0.750000 | 0.000000 | -0.395765 | -0.750000 | -0.500000 | -0.286568 |
| -0.500000 | 0.000000 | -0.392398 | -0.500000 | -0.500000 | -0.252926 |
| -0.250000 | 0.000000 | -0.271131 | -0.250000 | -0.500000 | -0.147509 |
| 0.000000 | 0.000000 | 0.040711 | 0.000000 | -0.500000 | -0.006535 |
| 0.250000 | 0.000000 | 0.263490 | 0.250000 | -0.500000 | 0.158144 |
| 0.500000 | 0.000000 | 0.370511 | 0.500000 | -0.500000 | 0.276341 |
| 0.750000 | 0.000000 | 0.394232 | 0.750000 | -0.500000 | 0.296499 |
| 1.000000 | 0.000000 | 0.384734 | 1.000000 | -0.500000 | 0.273960 |
| 1.250000 | 0.000000 | 0.309608 | 1.250000 | -0.500000 | 0.200586 |
| 1.500000 | 0.000000 | 0.164066 | 1.500000 | -0.500000 | 0.131753 |
| 1.750000 | 0.000000 | 0.065380 | 1.750000 | -0.500000 | 0.056884 |
| 2.000000 | 0.000000 | 0.019721 | 2.000000 | -0.500000 | 0.006110 |
| -2.000000 | -0.250000 | 0.016301 | -2.000000 | -0.750000 | -0.000549 |
| -1.750000 | -0.250000 | -0.038612 | -1.750000 | -0.750000 | -0.052786 |
| -1.500000 | -0.250000 | -0.186808 | -1.500000 | -0.750000 | -0.111666 |
| -1.250000 | -0.250000 | -0.314271 | -1.250000 | -0.750000 | -0.155798 |
| -1.000000 | -0.250000 | -0.366934 | -1.000000 | -0.750000 | -0.202361 |
| -0.750000 | -0.250000 | -0.358810 | -0.750000 | -0.750000 | -0.200139 |
| -0.500000 | -0.250000 | -0.308029 | -0.500000 | -0.750000 | -0.195783 |
| -0.250000 | -0.250000 | -0.211356 | -0.250000 | -0.750000 | -0.137427 |
| 0.000000 | -0.250000 | -0.008331 | 0.000000 | -0.750000 | 0.027790 |
| 0.250000 | -0.250000 | 0.211205 | 0.250000 | -0.750000 | 0.145134 |
| 0.500000 | -0.250000 | 0.339159 | 0.500000 | -0.750000 | 0.164903 |
| 0.750000 | -0.250000 | 0.391019 | 0.750000 | -0.750000 | 0.172669 |
| 1.000000 | -0.250000 | 0.364061 | 1.000000 | -0.750000 | 0.170072 |
| 1.250000 | -0.250000 | 0.270616 | 1.250000 | -0.750000 | 0.155960 |
| 1.500000 | -0.250000 | 0.163229 | 1.500000 | -0.750000 | 0.093517 |
| 1.750000 | -0.250000 | 0.057204 | 1.750000 | -0.750000 | 0.041786 |
| 2.000000 | -0.250000 | 0.010404 | 2.000000 | -0.750000 | 0.011900 |

FIG_1c

EP 0 724 142 B1

**FIG_1d**

| x | y | z |
|---|---|---|
| -2.000000 | -1.000000 | -0.008025 |
| -1.750000 | -1.000000 | -0.026662 |
| -1.500000 | -1.000000 | -0.058222 |
| -1.250000 | -1.000000 | -0.111850 |
| -1.000000 | -1.000000 | -0.136389 |
| -0.750000 | -1.000000 | -0.153824 |
| -0.500000 | -1.000000 | -0.147469 |
| -0.250000 | -1.000000 | -0.106432 |
| 0.000000 | -1.000000 | 0.022004 |
| 0.250000 | -1.000000 | 0.127155 |
| 0.500000 | -1.000000 | 0.125799 |
| 0.750000 | -1.000000 | 0.120553 |
| 1.000000 | -1.000000 | 0.114838 |
| 1.250000 | -1.000000 | 0.094198 |
| 1.500000 | -1.000000 | 0.061099 |
| 1.750000 | -1.000000 | 0.030868 |
| 2.000000 | -1.000000 | 0.014198 |
| -2.000000 | -1.250000 | -0.011411 |
| -1.750000 | -1.250000 | -0.018427 |
| -1.500000 | -1.250000 | -0.040538 |
| -1.250000 | -1.250000 | -0.071264 |
| -1.000000 | -1.250000 | -0.091605 |
| -0.750000 | -1.250000 | -0.103939 |
| -0.500000 | -1.250000 | -0.117804 |
| -0.250000 | -1.250000 | -0.093424 |
| 0.000000 | -1.250000 | 0.002801 |
| 0.250000 | -1.250000 | 0.105437 |
| 0.500000 | -1.250000 | 0.115052 |
| 0.750000 | -1.250000 | 0.090037 |
| 1.000000 | -1.250000 | 0.066048 |
| 1.250000 | -1.250000 | 0.067891 |
| 1.500000 | -1.250000 | 0.049265 |
| 1.750000 | -1.250000 | 0.022720 |
| 2.000000 | -1.250000 | 0.008403 |
| -2.000000 | -1.500000 | -0.005874 |
| -1.750000 | -1.500000 | -0.007361 |
| -1.500000 | -1.500000 | -0.010020 |
| -1.250000 | -1.500000 | -0.014366 |
| -1.000000 | -1.500000 | -0.025949 |
| -0.750000 | -1.500000 | -0.037174 |
| -0.500000 | -1.500000 | -0.056252 |
| -0.250000 | -1.500000 | -0.066948 |
| 0.000000 | -1.500000 | 0.006116 |
| 0.250000 | -1.500000 | 0.087322 |
| 0.500000 | -1.500000 | 0.068416 |
| 0.750000 | -1.500000 | 0.054715 |
| 1.000000 | -1.500000 | 0.044173 |
| 1.250000 | -1.500000 | 0.031410 |
| 1.500000 | -1.500000 | 0.031047 |
| 1.750000 | -1.500000 | 0.017532 |
| 2.000000 | -1.500000 | 0.003445 |
| -2.000000 | -1.750000 | 0.004207 |
| -1.750000 | -1.750000 | -0.001032 |
| -1.500000 | -1.750000 | -0.003312 |
| -1.250000 | -1.750000 | 0.000649 |
| -1.000000 | -1.750000 | -0.003620 |
| -0.750000 | -1.750000 | -0.005950 |
| -0.500000 | -1.750000 | -0.018969 |
| -0.250000 | -1.750000 | -0.016143 |
| 0.000000 | -1.750000 | 0.027792 |
| 0.250000 | -1.750000 | 0.013383 |
| 0.500000 | -1.750000 | 0.010227 |
| 0.750000 | -1.750000 | 0.026625 |
| 1.000000 | -1.750000 | 0.043357 |
| 1.250000 | -1.750000 | 0.030179 |
| 1.500000 | -1.750000 | 0.002605 |
| 1.750000 | -1.750000 | -0.002010 |
| 2.000000 | -1.750000 | -0.002599 |

FIG_2

Si $S1 \epsilon f_1$ et $S2 \epsilon g_1$ et $S3 \epsilon h_1$ alors $O \epsilon q1$

Si $S1 \epsilon f_1$ et $S2 \epsilon g_1$ et $S3 \epsilon h_2$ alors $O \epsilon q1$

— — — — — — — — — — — — — — — — — — — —

Si $S1 \epsilon f_2$ et $S2 \epsilon g_2$ et $S3 \epsilon h_2$ alors $O \epsilon q2$

— — — — — — — — — — — — — — — — — — — —

Si $S1 \epsilon f_n$ et $S2 \epsilon g_n$ et $S3 \epsilon h_n$ alors $O \epsilon q_n$

FIG_3

# FIG_4